(19) Europäisches Patentamt
European Patent Office
Office européen des brevets

(11) **EP 2 193 335 B1**

(12) **EUROPÄISCHE PATENTSCHRIFT**

(45) Veröffentlichungstag und Bekanntmachung des Hinweises auf die Patenterteilung:
**21.10.2015 Patentblatt 2015/43**

(21) Anmeldenummer: **08787285.9**

(22) Anmeldetag: **18.08.2008**

(51) Int Cl.:
**G01C 19/56** *(2012.01)* **G01C 19/574** *(2012.01)*

(86) Internationale Anmeldenummer:
**PCT/EP2008/060802**

(87) Internationale Veröffentlichungsnummer:
**WO 2009/033915 (19.03.2009 Gazette 2009/12)**

(54) **MIKROMECHANISCHER DREHRATENSENSOR**

MICROMECHANICAL RATE-OF-ROTATION SENSOR

CAPTEUR DE VITESSE DE ROTATION MICROMÉCANIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.09.2007 DE 102007042681**
**27.11.2007 DE 102007057042**

(43) Veröffentlichungstag der Anmeldung:
**09.06.2010 Patentblatt 2010/23**

(73) Patentinhaber: **Continental Teves AG & Co. OHG 60488 Frankfurt (DE)**

(72) Erfinder:
• **SCHMID, Bernhard 61169 Friedberg (DE)**
• **GÜNTHNER, Stefan 60489 Frankfurt (DE)**

(56) Entgegenhaltungen:
**WO-A-96/39614 US-B1- 6 230 563**

EP 2 193 335 B1

**Beschreibung**

Die Erfindung betrifft einen Drehratensensor gemäß Oberbegriff von Anspruch 1, ein Verfahren zur Herstellung eines Drehratensensors gemäß Oberbegriff von Anspruch 20 sowie die Verwendung des Drehratensensors in Kraftfahrzeugen.

Drehratensensoren werden üblicherweise verwendet., um die Winkelgeschwindigkeit eines Systems um zumindest eine definierte Achse zu erfassen. Ein wichtiges Anwendungsgebiet von Drehratensensoren ist die Automobiltechnik, zum Beispiel in Fahrdynamikregelungssystemen wie dem elektronischen Stabilitätsprogramm (ESP) oder einer so genannten Rollöver-Detektion. Solche sicherheitskritischen Einsatzbereiche stellen dabei besondere Anforderungen an die Drehratensensoren.

Druckschrift US 6,230,563 B1 beschreibt einen Z-Achsen-Drehratensensor, welcher also eine Drehrate um dessen Z-Achse erfassen kann, wobei die Grundfläche seines Substrats parallel zur x-y-Ebene (kartesisches Koordinatensystem) ausgerichtet ist. Dieser Drehratensensor weist zwei seismische Massen auf, welche mittels eines Kopplungsbalkens miteinander gekoppelt sind, wobei der Kopplungsbalkens an einer Torsionsfeder am Substrat aufgehängt ist. Die seismischen Massen sind direkt am Substrat aufgehängt, wobei diese Aufhängung so ausgebildet ist, dass sie sowohl für die Antriebsals auch die Auslesemoden des Drehratensensors die Auslenkbarkeit der seismischen Massen gewährleisten muss, wodurch ein unerwünschtes Übersprechen zwischen beiden Schwingungsmoden erfolgen kann, welches die Messung negativ beeinflussen kann.

In Druckschrift WO 2006/034706 A1 wird vorgeschlagen, die seismischen Massen an einem Rahmen aufzuhängen, welcher seinerseits am Substrat aufgehängt ist. Hierdurch lassen sich Freiheitsgrade in der Aufhängung in sofern einschränken, dass beispielsweise die Rahmenstruktur samt den seismischen Massen in der Antriebsmode schwingt, in der Au-slesemode ällerdings nur die seismischen Massen schwingen, wodurch ein Übersprechen zwischen den beiden Schwingungsmöden weitgehend vermieden werden kann. Allerdings ist die Kopplung der seismischen Massen über die vorgeschlagene Kopplungseinheit empfindlich gegenüber gleichgerichteten Störanregungen in Messrichtung wie beispielsweise Stößen.

Die WO 96/39614 offenbart einen Drehratensensor mit gekoppelten Massen.

Es sind mikromechanische Federn zur Aufhängung seismischer Massen in Drehratensensoren bekannt, welche schon aufgrund von relativ geringen Fertigungsungenauigkeiten, die insbesondere zu unerwünschten Flankenwinkeln der jeweiligen Strukturen führen, ohne Vorliegen einer Drehrate in der Antriebsmode Auslenkungen in Ausleserichtung verursachen. Hierdurch werden Störsignale erzeugt, welche möglicherweise als Drehratensignalanteile ausgewertet werden und somit das Drehratensignal verfälschen bzw. einen Messfehler bezüglich des Drehratensignals verursachen.

Solche unerwünschten Flankenwinkel bzw. Verkippungen von Federn sind prozessbedingt und können nur eingeschränkt vermieden werden. Obig beschriebene Störsignale, welche nicht aufgrund einer erfassten Drehrate, sondern aufgrund von fehlerhaften Auslenkungen in Ausleserichtung in Abhängigkeit der Auslenkung der seismischen Masse sowie deren Federn in Antriebsrichtung entstehen, werden auch als Quadratursignale bzw. Quadratur bezeichnet.

Die Aufgabe der vorliegenden Erfindung besteht darin, einen relativ präzise bzw. störungsfrei messenden mikromechanischen Drehratensensor vorzuschlagen und dabei insbesondere parasitäre Moden und-Störauslenkungen der seismischen Massen zu vermeiden oder zu verringern.

Die Aufgabe wird erfindungsgemäß gelöst durch den Drehratensensor gemäß Anspruch 1 und das Verfahren zur Herstellung eines Drehraterisensors gemäß Anspruch 20.

Der Erfindung liegt der Gedanke zu Grunde, auszugehen vom Stand der Technik, bei dem ein Drehratensensor mindestens zwei seismische Massen aufweist, welche durch mindestens einen Kopplungsbalken miteinander gekoppelt sind. Zusätzlich weist der Drehratensensor mindestens ein Aufhängungs-Federelement umfassend zumindest zwei Balkenabschnitten, die im unausgelenkten Zustand im Wesentlichen zueinander parallel ausgerichtet sind oder eine Winkelweite von weniger als 45° zueinander aufweisen, und ein oder mehrere Verbindungsabschnitte auf, die die Balkenabschnitte miteinander verbinden, wobei die Balkenabschnitte bezüglich ihrer Längsrichtung relativ zueinander verschiebbar sind.

Die Verwendung solch eines Aufhängungs-Federelements bzw. solch einer Linearfeder in einem Drehratensensors unterdrückt die Quadratur bzw. vermindert das Auftreten von Quadratursignalen.

Der wenigstens eine Kopplungsbalken unterdrückt im Wesentlichen gleichgerichtete Auslenkungen der mittels des Kopplungsbalkens gekoppelten Massen und die damit einhergehenden Störsignale bzw. -signalanteile. Der mindestens eine Kopplungsbalken unterdrückt dabei besonders bevorzugt gleichgerichtete Auslenkung bzw. parasitäre Moden der Antriebs- und/oder der Auslesemode.

Ein Aufhängungs-Federelement, welches zumindest zwei Balkenabschnitte, die im unausgelenkten Zustand im Wesentlichen - zueinander parallel ausgerichtet sind oder eine Winkelweite von.weniger als 45° zueinander aufweisen, und ein oder mehrere Verbindungsabschnitte umfasst, die die Balkenabschnitte miteinander verbinden, wobei die Balkenabschnitte bezüglich ihrer Längsrichtung relativ zueinander verschiebbar sind, wird bevorzugt auch als Linearfeder bezeichnet, wobei diese besonders bevorzugt ein einstellbares, insbesondere lineares, Auslenkverhalten aufweisen.

Die Linearfeder hat gegenüber bisher bekannten mikromechanischen Federn den Vorteil, dass das Auslenkintervall innerhalb dessen die Feder ein im Wesentlichen einstellbares, insbesondere lineares, Auslenkverhalten aufweist relativ groß ist und dass die Feder dabei relativ kleine Abmessungen aufweist. Zudem weist die Linearfeder ein deutlich geringeres Störverhalten aufgrund von Fertigungsungenauigkeiten, welche zu einer Verkippung der Feder und damit zu einem Störsignal führen könnten, als herkömmliche Federn auf.

Vorzugsweise weist die mikromechanische Feder zumindest zwei Balkenabschnitte auf, welche im Wesentlichen direkt gegenüberliegend angeordnet sind und mittels eines Verbindungsabschnitts miteinander verbunden sind.

Ein Balkenabschnitt unterscheidet sich von einem Verbindungsabschnitt insbesondere zumindest dadurch, dass der Balkenabschnitt deutlich länger, besonders bevorzugt wenigstens doppelt so lang ist, wie der mindestens eine angrenzende Verbindungsabschnitt, wobei diese beiden Abschnitte insbesondere in Form wenigstens einer Rundung in einander übergehen können.

Die Balkenabschnitte bereits bekannter, mäanderförmiger Federn werden im Zuge einer Auslenkung im Wesentlichen nicht bezüglich ihrer Längsrichtung zueinander verschoben. Bei der Auslenkung mäanderförmiger Federn handelt es sich im Wesentlichen um eine longitudinale Auslenkung entlang der gesamten Länge der Feder.

Unter dem Begriff Auslenkung wird bevorzugt der Auslenkungsweg bzw. die Auslenkungsstrecke verstanden. Die Auslenkung des Aufhängungs-Federelements und/oder der Linearfeder erfolgt insbesondere im Wesentlichen in Richtung ihrer Balkenabschnitte.

Unter einem im Wesentlichen linearen Auslenkverhalten einer Feder wird vorzugsweise ein im Wesentlichen linearer Zusammenhang zwischen Auslenkungsweg und Rückstellkraft, insbesondere eine im Wesentlichen konstante Federsteifigkeit, verstanden.

Bei der im Wesentlichen linearen Feder und/oder der Linearfeder handelt es sich vorzugsweise um eine erfindungsgemäße mikromechanische Feder.

Die Balkenabschnitte und Verbindungsabschnitte sind bevorzugt jeweils starr miteinander verbunden.

Der Drehratensensor weist zweckmäßigerweise wenigstens eine Antriebseinrichtung bzw. ein Antriebsmittel zum Antrieb der seismischen Massen sowie ein oder mehrere Ausleseeinrichtungen zur direkten oder indirekten Erfassung der seismischen Massen auf.

Die Ausleseeinrichtungen sind vorzugsweise zur Erfassung von Auslenkungen der seismischen Massen vorgesehen und entsprechend weisen die seismischen Massen jeweils mindestens ein Mittel zum Erfassen von Auslenkungen auf, welche/s jeweils zumindest einer Ausleseeinrichtung zugeordnet ist/sind.

Eine seismische Masse umfasst bevorzugt zumindest teilweise eine oder mehrere Antriebseinrichtungen und/oder zumindest teilweise eine oder mehrere Ausleseeinrichtungen und-/oder ein oder mehrere zusätzliche mikromechanische Elemente des Drehratensensors.

Zweckmäßigerweise kann die Kopplung des Kopplungsbalkens mit jedem Teil einer seismischen Masse ausgebildet sein.

Unter einem Substrat wird ein Grund- und/oder Trägerkörper und/oder Gehäuseteil des Drehratensensors verstanden, welcher bevorzugt ein im Wesentlichen unstrukturierter Teil des Wafers ist, aus welchem der Drehratensensor ausgebildet ist. Besonders bevorzugt besteht das Substrat aus kristallinem oder polykristallinem, insbesondere leitendem, Silizium oder einer oder mehreren Schichten Halbleitermaterials und/oder Metall/en und/oder elektrisch isolierenden Schichten.

Unter einer Antriebsmode bzw. Primärmode wird eine Eigenmode eines Drehratensensors verstanden, bevorzugt die Eigenschwingung, besonders bevorzugt die Schwingung mit einer Resonanzfrequenz, der mindestens zwei seismische Massen, in welcher die seismischen Massen des Drehratensensors insbesondere ständig schwingen. Ganz besonders bevorzugt schwingen die wenigstens zwei seismischen Massen gegenphasig bzw. werden jeweils mit inverser Orientierung zueinander in gleicher Richtung im Zuge der Antriebsmode ausgelenkt.

Unter einer Auslesemode bzw. Sekundärmode wird eine Eigenmode verstanden, welche sich vorzugsweise aufgrund einer Drehrate und der damit verbundenen Wirkung der Corioliskraft einstellt.

Der Drehratensensor wird vorzugsweise mittels Oberflächenmikromechanik hergestellt. Dabei werden die Strukturen in ein Membranmaterial, insbesondere Silizium, durch besonders bevorzugt anisotropes Trockenätzen im Wesentlichen senkrecht durch die Membran geätzt. Die Ebene der Membrangrundfläche erstreckt sich im Wesentlichen parallel zur Substratoberfläche. An den Stellen, wo die Membran mit dem darunter liegenden Substrat fest verbunden ist, entstehen Ankerpunkte, an denen wiederum entweder Federelemente oder unbewegliche Strukturen befestigt sind. Dadurch können starre Körper, welche an Federn aufgehängt werden, frei schwingend realisiert werden. Die Ankerpunkte sind ganz besonders bevorzugt durch isolierende Schichten voneinander elektrisch isoliert und von außen kontaktierbar.

Die Substratebene bzw. die Grundfläche des Substrats ist bevorzugt so ausgerichtet, dass sie parallel zur x-y-Ebene eines kartesischen Koordinatensystems ausgerichtet ist. Die z-Achse dieses Koordinatensystems verläuft senkrecht zur Substratebene. Die Koordinatenachsen sind bzgl. der Ausbildung und Anordnung von Komponenten des Drehratensensors insbesondere parallel verschiebbar.

Das mindestens eine Aufhängungs-Federelement besteht bevorzugt aus einkristallinem Silizium.

Der Drehratensensor weist bevorzugt ein oder mehrere Antriebsmittel einer oder mehrerer seismischer Massen und wenigstens eine Ausleseeinrichtung auf, wobei das mindestens eine Antriebsmittel die mindestens zwei seismischen Massen in y-Richtung antreibt und der Drehratensensor so ausgelegt ist, dass er Drehraten um die x-Achse und/oder z-Achse erfassen kann.

Unter einem Antriebsmittel wird vorzugsweise ein Kammantrieb mit zwei ineinander greifenden, gegeneinander elektrisch im Wesentlichen isolierten, Kämmen verstanden, von denen einer mit mindestens einer seismischen Masse und der andere mit dem Substrat verbunden ist. Durch Anlegen einer Differenzspannung an diese Kämme können diese gegeneinander bewegt werden. Mittels mindestens eines Antriebsmittels wird insbesondere die Antriebsmode erzeugt.

Die Ausleseeinrichtung besteht zweckmäßigerweise aus einer Einrichtung, welche mindestens zwei Elektroden oder andere elektrische/elektronische Elemente aufweist, deren Kapazität/Kapazitätsänderungen im Verbund und/oder deren Potentialdifferenz zueinander gemessen wird. Insbesondere weist solch eine Auslesevorrichtung ineinander greifende, gegeneinander elektrisch im Wesentlichen isolierte. Kammstrukturen auf, von denen eine am Basiselement, besonders bevorzugt an einer oder mehreren seismischen Massen befestigt ist, und/oder am Kopplungsbalken und die andere am Substrat. Alternativ oder zusätzlich weist eine Auslesevorrichtung insbesondere ein Elektrodenpaar auf, welches insbesondere eine von einer seismischen Masse umfasste Elektrode und eine dazu im Wesentlichen parallel ausgebildete und angeordnete Elektrode in einem Deckelmodul bzw. Verkapselungsmodul umfasst.

Das mindestens eine Antriebsmittel treibt die mindestens zwei Basiselemente zweckmäßigerweise in y-Richtung an, wobei der Drehratensensor so ausgelegt ist, dass er Drehraten um die x-Achse und/oder z-Achse erfassen kann. Diese Konstellationen sind messtechnisch besonders günstig, da Auslenkungen der seismischen Massen zu erfassen sind, welche sich aufgrund der Corioliskraft ergeben. Die Corioliskraft wirkt senkrecht zur Antriebsrichtung und senkrecht zur Drehachse.

Vorzugsweise ist jeder seismischen Masse mindestens eine Ausleseeinrichtung zugeordnet.

Es ist bevorzugt, dass die Ausleseeinrichtungen bzw. - einheiten als Antriebsmittel bzw. -einheiten verwendet werden sowie die Antriebseinheiten als Ausleseeinheiten, wodurch eine Verwendung mit vertauschten Antriebs- und Auslesemoden beispielhaft möglich ist.

Es ist zweckmäßig, dass der Kopplungsbalken an zumindest einem Federelement, insbesondere an einem Balkenfederelement, aufgehängt ist, welches insbesondere am Substrat eingespannt ist und mit diesem mindestens einen Ankerpunkt bildet, wobei das Federelement so ausgebildet und eingespannt bzw. befestigt ist, dass es translatorische Auslenkungen des Kopplungsbalkens verhindert. Durch die Verhinderung solch translatorischer Auslenkungen sind die Freiheitsgrade des Drehratensensors eingeschränkt und unsaubere, überlagerte Schwingungszustände können zumindest teilweise vermieden bzw. begrenzt oder vermindert werden. Der Kopplungsbalken ist dabei insbesondere im Wesentlichen im Bereich seines Schwerpunkts an dem zumindest einen Federelement aufgehängt. Besonders bevorzugt ist das zumindest eine Federelement, an welchem der Kopplungsbalken aufgehängt ist, eine Torsionsfeder, welche eine rotatorische Auslenkung des Kopplungsbalkens um die z-Achse und/oder die x-Achse ermöglicht bzw. zulässt.

Der Schwerpunkt des einen oder der mehreren Kopplungsbalken fällt bevorzugt, insbesondere insgesamt, im Wesentlichen mit dem Schwerpunkt des gesamten Drehratensensors, insbesondere jeweils bezogen auf die x-y-Ebene, zusammen.

Der Kopplungsbalken ist an beiden Enden zweckmäßigerweise jeweils mit einer oder mehreren seismischen Masse/n und/oder einer oder mehreren Ausleseeinrichtung/en und/oder einem oder mehreren Antriebsmitteln direkt oder über mindestens ein Federelement bzw. ein Federsystem gekoppelt, welches insbesondere Torsionsfedern umfasst.

Es ist bevorzugt, dass die seismischen Massen jeweils bezüglich einer x-y- und/oder x-z- und/oder y-z-Ebene bezüglich eines kartesischen Koordinatensystems mit dem jeweiligen Mittelpunkt und/oder Schwerpunkt als jeweiligem Ursprung dieses Koordinatensystems symmetrisch ausgebildet und angeordnet sind und eine diesbezüglich symmetrische Aufhängung, insbesondere hinsichtlich der Aufhängungspunkte, besonders bevorzugt am Substrat, mit insbesondere vier oder einem Vielfachen an Aufhängungs-Federelementen, aufweisen. Hierdurch können zusätzlich Fehlauslenkungen der seismischen Massen, hervorgerufen durch Fertigungsungenauigkeiten bzw. Verkippungen vermieden werden, da diese durch solch eine symmetrische Aufhängung zusätzlich weitestgehend vermieden bzw. unterdrückt werden.

Zumindest eines der Aufhängungs-Federelemente weist zweckmäßigerweise ein im Wesentlichen einstellbares, insbesondere lineares, Kraft-Auslenkverhalten im Wesentlichen in Richtung seiner Balkenabschnitte und besonders bevorzugt im Wesentlichen in Antriebsrichtung bzw. y-Richtung einer seismischen Masse auf. Diese seismische Masse ist dabei an diesem einen oder mehreren Aufhängungs-Federelemente, ganz besonders bevorzugt vier Aufhängungs-Federelementen mit linearem Kraft-Auslenkungsverhalten in Richtung ihrer Balkenabschnitte und in Abtriebsrichtung, aufgehängt.

Es ist zweckmäßig, dass zumindest eines der Aufhängungs-Federelemente einen Kopplungsbereich und/oder ein Kopplungselement aufweist, welches insbesondere ein zusätzliches mikromechanisches Federelement umfasst.

Es ist bevorzugt, dass zumindest eines der Aufhängungs-Federelemente Fertigungsparameter, umfassend zumindest die räumlichen Abmessungen und/oder die Materialparameter der Balkenabschnitte und des wenigstens einen Verbindungsabschnitts und insbesondere der Kopplungsbereiche und/oder der Kopplungselemente, solche Werte aufweisen, dass die Feder in Richtung ihrer Balkenabschnitte ein im Wesentliches einstellbares, insbesondere lineares, Kraft-Auslenkverhalten, zumindest innerhalb eines definierten Auslenkungsintervalls, aufweist.

Zumindest eines der Aufhängungs-Federelemente ist vorzugsweise so ausgebildet, dass die Balkenabschnitte und der/die Verbindungsabschnitt/e der Feder im unausgelenkten Zustand im Wesentlichen u-förmig, v-förmig oder s-förmig ausgebildet und angeordnet sind.

Zumindest eines der Aufhängungs-Federelemente weist zweckmäßigerweise ein im Wesentlichen einstellbares, insbesondere lineares, Kraft-Auslenkverhalten insbesondere zur Kompensation eines unerwünschten und/oder nichtlinearen Auslenkverhaltens der restlichen Aufhängungs-Federelemente auf, welches zumindest durch die Ausbildung der Balkenabschnitte mit definierten Längen und Breiten sowie durch eine Anordnung der wenigstens zwei Balkenabschnitte mit einem definierten Abstand zueinander bestimmt ist.

Es ist bevorzugt, dass die Kristallstruktur des Materials zumindest eines der Aufhängungs-Federelemente so ausgerichtet ist, dass die Normale der Kristallgitterebene um im Wesentlichen 45° zur Normalen des Substrats, aus welchem die Feder gefertigt ist, ausgerichtet ist. Dies entspricht insbesondere Miller-Indizes von <1,1,0>.

Zumindest eines der Aufhängungs-Federelemente ist vorzugsweise so ausgebildet, dass der Betrag des Nichtlinearitätskoeffizienten zweiter Ordnung ihrer Federsteifigkeit bezüglich einer Auslenkung im Wesentlichen in Richtung ihrer Balkenabschnitte geringer ist als 2000000 $1/m^2$, insbesondere geringer als 300000 $1/m^2$.

Unter dem Nichtlinearitätskoeffizienten 2. Ordnung der Federsteifigkeit, auch einfach Nichtlinearitätskoeffizient genannt, wird bevorzugt der Parameter bzw. Faktor ß $[1/m^2]$ in folgender Gleichung der normierten Federsteifigkeit in Abhängigkeit der Auslenkung $x_0$ verstanden:

$$\hat{k}(x_0) = (1 + \alpha x_0 + ß x_0^2),$$

wobei folgende Zusammenhänge gelten:

$$k(x_0) = k_0(1 + \alpha x_0 + ß x_0^2), \quad \hat{k}(x_0) = k(x_0)/k_0.$$

Die Federsteifigkeit ist dabei zweckmäßigerweise gleich dem Quotient aus der Rückstellkraft bzw. der Auslenkungskraft geteilt durch den Auslenkungsweg.

Es ist zweckmäßig, dass zumindest eines der Aufhängungs-Federelemente so ausgebildet ist und ein solches Kraft-Auslenkungsverhalten aufweist, dass dieses ein nichtlineares Kraft-Auslenkungsverhalten einer seismischen Masse in Antriebsrichtung, hervorgerufen durch das unerwünschte Kraft-Auslenkungsverhalten einer oder mehrerer anderer Aufhängungs-Federelemente, kompensiert und diese seismische Masse insbesondere aufgrund dieses zumindest einen Aufhängungs-Federelements mit definiert eingestelltem Kraft-Auslenkungsverhalten insgesamt ein im Wesentlichen lineares Kraft-Auslenkungsverhalten in Antriebsrichtung aufweist.

Zumindest eines der Aufhängungs-Federelemente ist bevorzugt als Linearfeder ausgebildet. Besonders bevorzugt sind alle Aufhängungs-Federelemente einer seismischen Masse als Linearfedern ausgebildet.

Vorzugsweise weist zumindest eines der Aufhängungs-Federelemente einen negativen Nichtlinearitätskoeffizienten zweiter Ordnung der Federsteifigkeit bezüglich einer Auslenkung des Federelements im Wesentlichen in Richtung seiner Balkenabschnitte auf, was insbesondere einer Aufweichung der Federsteifigkeit bei zunehmender Auslenkung entspricht. Dies ist insbesondere zu Kompensationszwecken vorteilhaft im Vergleich zu herkömmlichen Federelementen, welche eine anwachsende Verhärtung bei zunehmender Auslenkung aufweisen.

Der Drehratensensor ist bevorzugt als x-Achsen-Sensor ausgebildet, kann also eine Drehrate um die x-Achse erfassen, wobei der Antrieb der seismischen Massen in y-Richtung erfolgt, wobei die seismischen Massen an Aufhängungs-Federelementen oder Federelementen aufgehängt sind, von denen jeweils eines in x-Richtung steif ausgebildet ist, wobei der Kopplungsbalken mittels einer Torsionsfeder, welche Torsionen um die x-Achse zulässt und steif in x- und z-Richtung ist, am Substrat aufgehängt ist und an jedem seiner beiden Enden mittels Federelementen mit den seismischen Massen gekoppelt ist.

Vorzugsweise ist der Drehratensensor ein x-z-Achsen-Sensor, welcher dem entsprechend Drehraten um die x- und z-Achse erfassen kann, wobei der Antrieb der Basiselemente in y-Richtung erfolgt, wobei der Kopplungsbalken mittels einer Torsionsfeder, welche Torsionen um die x-Achse und die z-Achse zulässt und steif in x- und z-Richtung ist, am Substrat aufgehängt ist.

Der Drehratensensor ist vorzugsweise als ein Mikro-ElektroMechanisches-System (MEMS) oder MEMS-Modul ausgebildet, welches insbesondere mechanische und elektronische Mittel zum Anschluss und/oder Zusammenwirken an/mit weiteren MEMS-Modulen und/oder mit mindestens einer ,insbesondere integrierten, elektronischen Signalverarbeitungsschaltung aufweist.

Die Erfindung betrifft zusätzlich ein Verfahren zur Herstellung eines Drehratensensors, wobei mittels eines Herstellungsprozesses zur Herstellung mikromechanischer Systeme aus einem Substrat, welches insbesondere aus kristallinem Silizium oder einer oder mehreren Schichten Halbleitermaterials und/oder Metall/en besteht, mikromechanische Elemente ausgebildet werden, wobei zumindest in Teilen ein obig beschriebener Drehratensensor, besonders bevorzugt entsprechend einem der Ausführungsbeispiele, ausgebildet wird.

Der erfindungsgemäße Drehratensensor ist zur Verwendung in Kraftfahrzeugen, insbesondere in einem Kraftfahrzeugregelungssystem, vorgesehen.

Der oben beschriebene Drehratensensor kann in unterschiedlichen Bereichen zum Erfassen einer oder mehrerer Drehraten und/oder mittels entsprechender Signalverarbeitung zur Erfassung einer oder mehrerer Drehbeschleunigungen verwendet werden. Dabei i.st die Verwendung in Fahrzeugen und in der Automatisierungstechnik bevorzugt, insbesondere in Kraftfahrzeugen und Luftfahrzeugen, besonders bevorzugt in den jeweiligen entsprechenden Regelungssystemen. Ganz besonders bevorzugt ist die Verwendung des Drehratensensors als Gierraten- und/oder Gierbeschleunigurigssensor in einem Kraftfahrzeugregelungssystem, wie beispielsweise ESP.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1      zwei Ausführungsbeispiele zur Aufhängung einer seismischen Masse mit Linearfedern,

Fig. 2      ein Ausführungsbeispiel mit zwei seismischen Massen, welche über einen Kopplungsbalken miteinander gekoppelt sind und hierdurch gegensätzliche Auslenkungen durchführen können,

Fig. 3      die beispielhafte Unterdrückung gleichgerichteter, translatorischer Bewegungen der seismischen Massen,

Fig. 4      ein Ausführungsbeispiel eines Drehratensensors mit einer Rotationsachse des Kopplungsbalkens parallel zur x-Achse,

Fig. 5 bis 7      Anbindung und Wirkungsweise eines beispielhaften Kopplungsbalkens bei Auslenkungen der seismischen Massen in z-Richtung,

Fig. 8 bis 10      ein Ausführungsbeispiel eines z-Achsen Drehratensensors und dessen Freiheitsgrade,

Fig. 11      einen beispielhaften x-z-Drehratensensor,

Fig. 12      Ausführungsbeispiele zur Aufhängung einer seismischen Masse,

Fig. 13      eine beispielhafte mäanderförmige Feder,

Fig. 14      ein Ausführungsbeispiel einer Linearfeder,

Fig. 15      die vergleichenden Verläufe der normierten Federsteifigkeiten in Abhängigkeit der Auslenkung dieser beiden Ausführungsbeispiele,

Fig. 16      ein beispielhafter x-Achsen-Drehratensensor,

Fig. 17      ein Ausführungsbeispiel eines x-z-Achsen-Drehratensensors, dessen seismische Massen mittig mit dem Kopplungsbalken verbunden sind,

Fig. 18      sowie die beispielgemäße Auslesemode in z-Richtung dieses Drehratensensors im Schritt,

Fig. 19      ein Ausführungsbeispiel eines x-z-Achsen-Drehratensensors mit zwei Kopplungsbalken, und

Fig. 20      einen Schnitt, welche dessen Auslesemode in z-Richtung veranschaulicht.

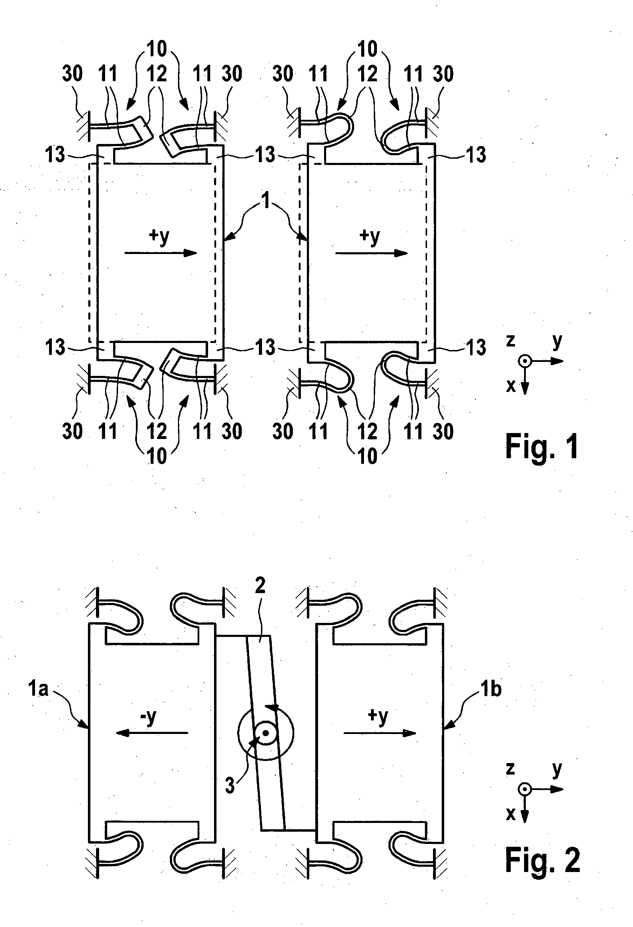

Fig. 1 zeigt zwei Ausführungsbeispiele zur Aufhängung einer seismischen Masse 1 mittels vier beispielgemäßen, vorgeschlagenen Aufhängungs-Federelementen bzw. Linearfedern 10 am Substrat 30. Diese verhindern das Auftreten von Quadratursignalen auf Grund möglicher Verkippungen der Federquerschnitte durch Fertigungsungenauigkeiten. Die beiden veranschaulichten Ausbildungsbeispiele der Aufhängungs-Federelemente bzw. Linearfedern 10 umfassen dabei jeweils zwei Balkenabschnitte 11, einen Verbindungabschnitt 12 sowie einen Kopplungsbereich 13, der einen der Balkenabschnitte mit seismischer Masse 1 verbindet. Die in Fig. 1 veranschaulichten Oszillatoren sind jeweils in y-Richtung ausgelenkt, wie durch die gestrichelte Linie verdeutlicht wird.

Die Aufhängungs-Federelemente 10 sind entsprechend ebenfalls in y-Richtung ausgelenkt abgebildet.

In Fig. 2 wird die Kopplung zweier seismischer Massen 1a, 1b mittels eines Kopplungsbalkens 2 veranschaulicht. Die Rotationsaufhängung 3 des Kopplungsbalkens erlaubt eine Drehung um die z-Achse, senkrecht zur Substratebene, ebenfalls senkrecht zur Antriebsrichtung y, wobei die Aufhängung des Kopplungsbalkens 2 dabei in der Substratebene der seismischen Massen vornehmlich steif ausgeführt ist. An den Enden des Kopplungsbalkens 2 sind die seismischen Massen 1a und 1b jeweils steif in Richtung ihrer Antriebsbewegung y aufgehängt.

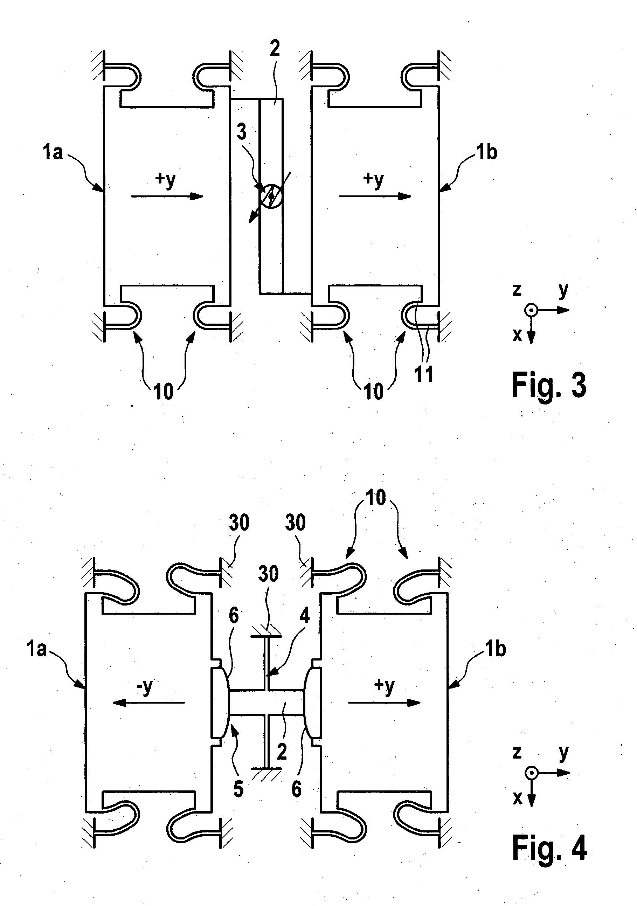

Bei einer Bewegung seismischer Massen 1a, 1b, aufgehängt an Linearfedern 10, auseinander oder aufeinander zu, rotiert Kopplungsbalken 2 mit. Versuchen seismische Massen 1a, 1b sich mit derselben Orientierung in y-Richtung zu bewegen, unterdrückt der Kopplungsbalken 2 aufgrund seiner rotatorischen Aufhängung 3, welche steif in y-Richtung ausgebildet ist, diese Bewegung, wie durch das Ausführungsbeispiel in Fig. 3 veranschaulicht. Des Weiteren zeigt Fig. 3 beispielgemäße Linearfedern 10 in unausgelenktem Zustand, wobei Balkenäbschnitte 11 jeweils im Wesentlichen parallel zueinander ausgerichtet sind.

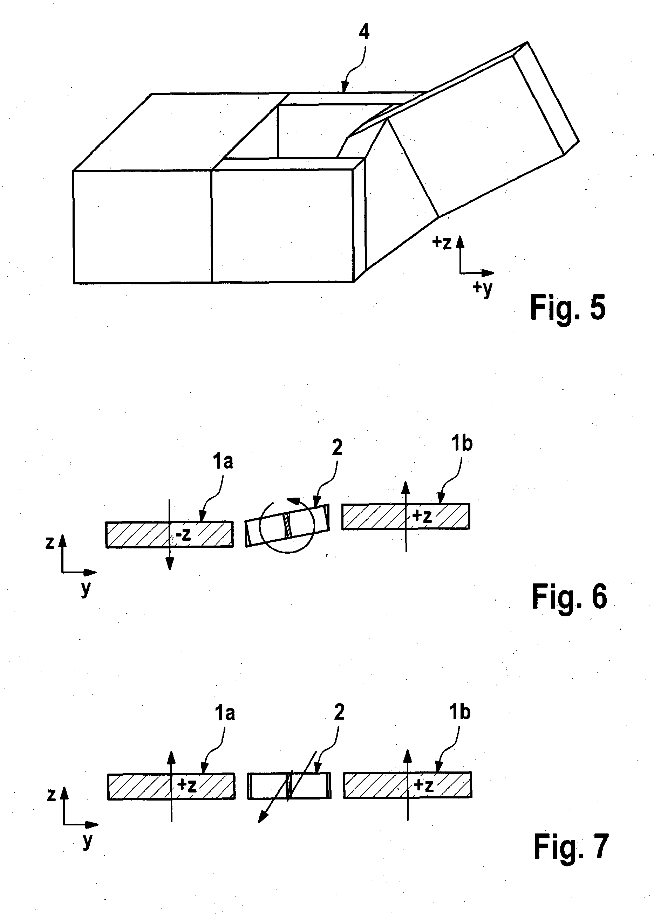

Fig. 4 zeigt einen beispielhaften Drehratensensor mit Kopplungsbalken 2, welcher um eine zur x-Achse parallel Achse rotieren kann. Die Anbindung an seismische Massen 1a, 1b erfolgt mittels einer, zusätzlich in Fig. 5 veranschaulichten, Torsionsfeder 4, welche in Fig. 6 beispielhaft veranschaulichte Auslenkungen der seismischen Massen in Z-Richtung zulassen. Das Federsystem 5 selbst, über das der Kopplungsbalken 2 mit der jeweiligen seismischen Masse 1a, 1b verbunden ist, gewährleistet eine starre Kopplung der jeweiligen seismischen Masse in z-Richtung und des entsprechenden Endes des Kopplungsbalkens. Die Eigenschaften der Federelemente 6 des Federsystems 5, werden beispielsweise durch Einstellen des Verhältnisses ihrer jeweiligen Breite zur Höhe eingestellt. Weist das jeweilige Federelement 6 eine wesentlich größere Ausdehnung in z- als in y-Richtung auf, so ist es steif in Z-Richtung, aber weich gegen Torsion um ihre Längsachse und gegen Auslenkungen in Y-Richtung. Seismische Massen 1a und 1b sind beispielgemäß mittels jeweils vier Aufhängungs-Federelementen 10 am Substrat 30 aufgehängt, wobei Aufhängungs-Federelemente 10 symmetrische Aufhängungspunkte an seismischen Massen 1a, 1b aufweisen und eine zueinander inverse Auslenkungsorientierung in y-Richtung bezüglich der beiden seismischen Massen aufweisen.

Eine gleichgerichtete Auslenkung der seismischen Massen in z-Richtung wird wie in Fig. 7 veranschaulicht unterdrückt.

Kopplungsbalken 2 ist, wie in Fig. 4 abgebildet, über eine am Substrat 30 befestigte Torsionsfeder 4 aufgehängt, welche als Balkenfeder ausgebildet ist und im Wesentlichen nur eine Torsion um die x-Achse zulässt und in z-Richtung steif ist. Auch dies kann bei einer Balkenfeder durch Anpassung des Verhältnisses Breite zu Höhe eingestellt werden. Eine gleichgerichtete Auslenkung dergestalt gekoppelter seismischer Massen in z-Richtung ist somit durch den starren Kopplungsbalken und die Torsionsfederaufhängung unterdrückt. Zu beachten ist dabei, dass der Hebelabstand zum Drehpunkt des Kopplungsbalkens und den seismischen Massen 1a, 1b auf jeder Seite identisch ist.

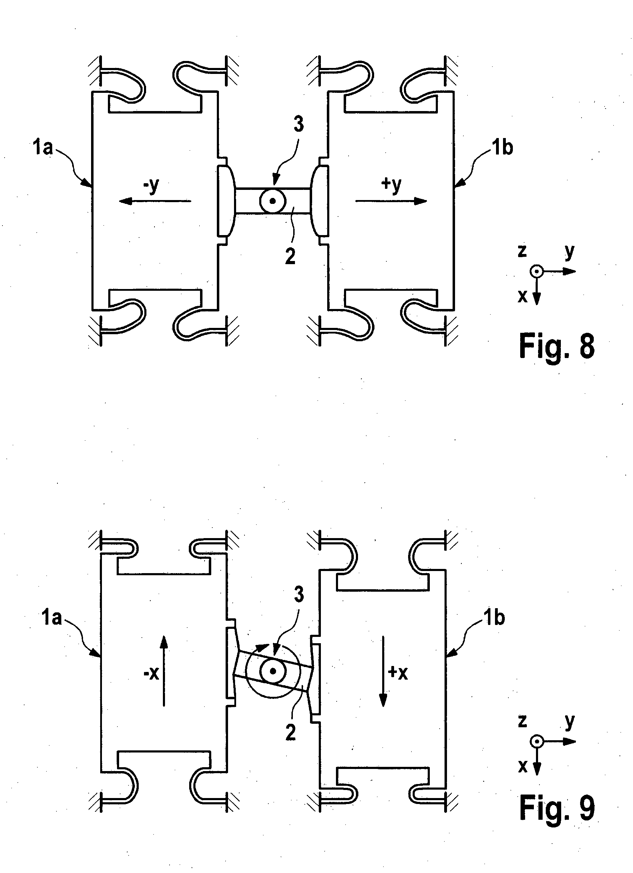

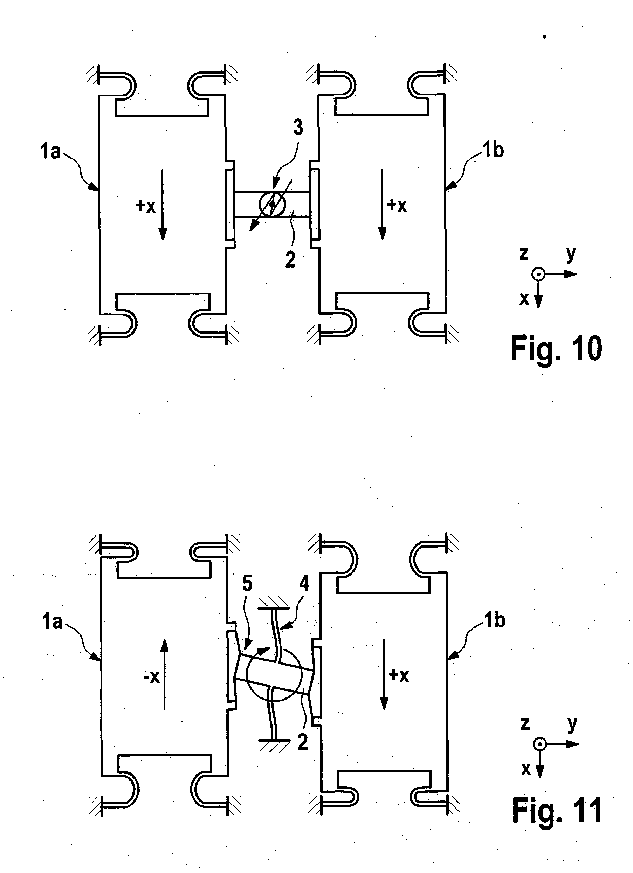

In Fig. 8, 9 und 10 sind ein beispielhafter z-Achsen-Drehratensensor veranschaulicht, bei welchem die Rotationachse des Kopplungsbalkens 2 eine Parallele zur z-Achse ist. Dabei zeigt Fig. 8 die Draufsicht des Ausführungsbeispiels, Fig. 9 entgegen gesetzte Auslenkungen seismischer Massen 1a, 1b sowie in Fig. 10 die Unterbindung von gleichgerichteten bzw. gleichorientierten Auslenkungen seismischer Massen 1a, 1b in x-Richtung, welche durch den Kopplungsbalken 2 sowie dessen Aufhängung 3 verhindert werden. Dabei ist beispielgemäß der Hebelabstand vom Drehpunkt bzw. von der Aufhängung 3 des Kopplungsbalkens 2 zu seismischen Massen 1a, 1b jeweils identisch. Die Anbindung der seismischen Massen 1a, 1b an den Kopplungsbalken 2 erfolgt über eine Federanordnung 5, welche die x-Position der jeweiligen seismischen Masse mit dem entsprechenden Balkenende verknüpft. Dabei ist diese Federanordnung 5 so ausgebildet, dass diese die Bewegungsrichtung bzw. die Auslenkung der seismischen Massen möglichst wenig beeinflusst.

Fig. 11 zeigt einen beispielhaften x-z-Drehratensensor dessen Kopplungsbalken 2 sowohl um seine x-Achse, als auch um seine z-Achse rotatorisch auslenkbar an Torsionsfeder 4 aufgehängt ist. Dadurch können seismischen Massen 1a, 1b gegenphasig sowohl in z-Richtung, als auch in x-Richtung ausgelenkt werden. Gleichgerichtete bzw. gleichorientierte Auslenkungen der seismischen Massen werden dabei unterdrückt. Beispielgemäß erfolgt die Anbindung des Kopplungsbalkens 2 an seismische Massen 1a, 1b mittels eines Federsystems 5, welches die seismischen Massen sowohl in x-, als auch in z-Richtung starr mit dem entsprechenden Ende des Kopplungsbalkens 2 verbindet, wie beispielhaft weiter oben beschrieben.

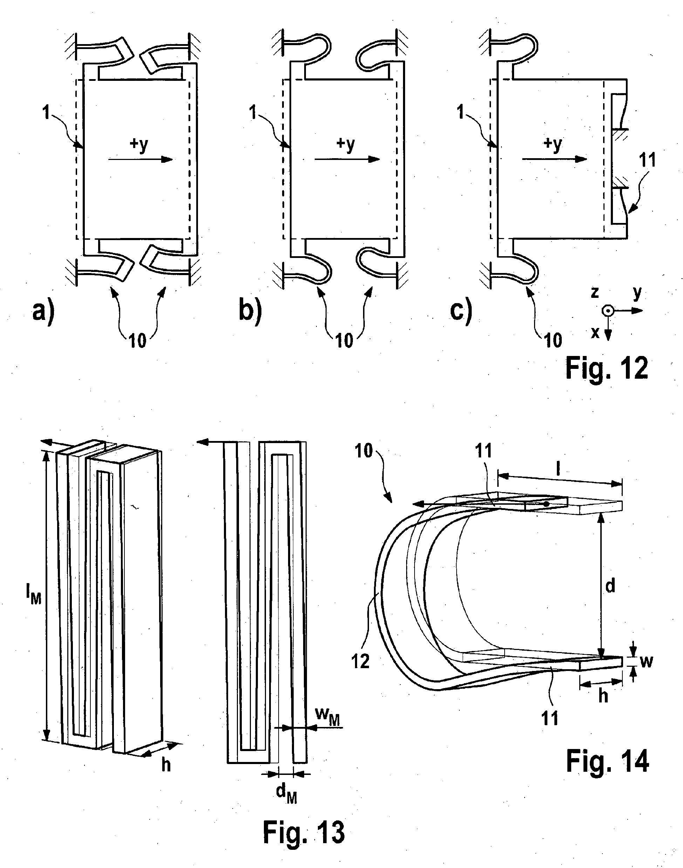

Fig. 12 veranschaulicht Ausführungsbeispiele für die Aufhängung einer seismischen Masse 1 mit Aufhängungs-Federelementen 10. Diese sind dabei in Fig. 12 a) und b) symmetrisch und als Linearfedern ausgebildet und angeordnet. Das in Fig. 12 c) dargestellte Ausführungsbeispiel unterdrückt Auslenkungen der seismischen Masse in x-Richtung durch die Aufhängung der seismischen Masse an zwei zusätzlichen in x-Richtung steif ausgebildeten Balkenfedern 11.

Im Folgenden sind beispielhafte Verfahren zur Realisierung bzw. Entwicklung von Linearfedern bzw. zur Entwicklung von Aufhängungs-Federelementen mit einstellbarem Auslenkverhalten beschrieben:

Verfahren mittels finiter Elemente:

Das Verfahren der finiten Elemente eröffnet die Möglichkeit, Federeigenschaften einer Balkenanordnung aus einem bestimmten Material, dessen elastische Eigenschaften bekannt sind, rechnergestützt zu beschreiben. Es können beispielsweise die Federsteifigkeiten in alle Raumrichtungen, bzw. um alle Raumachsen beschrieben werden. Dazu wird die Stelle der Feder, die einem als fixiert bzw. eingespannt angenommenen Ende der Feder entspricht, mit einer entsprechenden Randbedingung versehen und die Stelle, die einem als frei bzw. auslenkbar angenommenen Ende entspricht, exemplarisch um einen bestimmten Betrag in eine Raumrichtung, bzw. um eine Raumachse ausgelenkt. Aus dem Ergebnis der Analyse, beispielgemäß durch Bestimmung der Reaktionskraft auf den Auslenkungsweg, kann die Steifigkeit der Feder berechnet werden. Zur Bestimmung der Federsteifigkeit lassen sich auch andere bekannte Verfahren heranziehen, wie beispielsweise die Wirkung einer Kraft auf das freie Ende oder einer Beschleunigung auf eine angehängte Masse. Ferner können in der Finite-Elemente-Analyse beispielsweise nichtlineare Materialeigenschaften, sowie geometrische Nichtlinearitäten vollständig abgebildet werden. Damit kann bei gegebenen Dimensionen einer Materialanordnung die auslenkungsabhängige Federsteifigkeit und somit das Linearitätsverhalten bestimmt werden. Im Folgenden wird ein Verfahren beschrieben, mit dem das gewünschte Auslenkungsverhalten erzielt bzw. eingestellt werden kann.

Zunächst wählt man eine oder mehrere bestimmte Ausbildungsformen einer Feder aus und führt für jede einzelne die folgenden Untersuchungen durch. Nach der Analyse der Einzeluntersuchungen kann man sich für die optimale Federausbildung entscheiden.

Für eine Federausbildung wählt man danach die Dimensionen aus, die variiert werden können. Hat man $n$ freie Geometrieparameter $\xi_i$ ($i = 1...n$), die durch den Vektor $\overline{\xi} = (\xi_1, \xi_2, ... \xi_n)$ repräsentiert werden, zur Verfügung, so wird dadurch ein $n$-dimensionales Parameterfeld aufgespannt. Typischerweise gelten für die Parameter $\xi_i$ bestimmte Einschränkungen bezüglich der Werte, die sie annehmen können. Sie können etwa innerhalb eines Intervalls mit den Grenzwerten $a_{\xi_i}$ und $b_{\xi_i}$ liegen: $\xi_i \in [a_{\xi_i}; b_{\xi_i}]$.

Schließlich wählt man für jeden Geometrieparameter $\xi_i$ eine Anzahl von $m_i$ Werten aus, die innerhalb des Bereichs $[a_{\xi_i}; b_{\xi_i}]$ liegen: $\xi_{i,1}, \xi_{i,2}, ... \xi_{i,m_i}$. Daraus ergibt sich ein Satz von $\prod\limits_{i=1}^{n} m_i$ unterschiedlicher Parametervektoren $(\xi_{1,j_1}, \xi_{2,j_2}, ... \xi_{n,j_n})$ mit $j_i \in [1,2,...m_i]$. Für jede mögliche Kombinationen von $(j_1, j_2, ... j_n)$ gibt es einen zugehörigen Parametersatz $(\xi_{1,j_1}, \xi_{2,j_2}, ... \xi_{n,j_n})$, dem eine bestimmte Geometriedimensionierung entspricht. Für jede einzelne Geometriedimensionierung können nun die gewünschten Simulationen durchgeführt werden. Zur Bestimmung des Auslenkungsverhaltens sind hierzu beispielsweise mindestens drei Simulationen notwendig, bei denen das freie Ende um mindestens drei verschiedene Werte $x_1, x_2, ... x_p$ ($p \geq 3$) in die gewünschte Auslenkrichtung verschoben wird. Das Ergebnis sind mindestens drei Reaktionskräfte auf das ausgelenkte freie Ende entgegen der Auslenkrichtung: $F(x_1), F(x_2), ... F(x_p)$.

Hieraus lassen sich die Federsteifigkeiten $K(xq) = \frac{F(x_q)}{x_q}$ mit $q \in [1,2....p]$ berechnen. Man kann dann die Parameter $k_0$, $\alpha$ und $\beta$ der Funktion $k(x_0) = k_0\left(1 + \alpha\, x_0 + \beta\, x_0^2\right)$ so bestimmen, dass die Federkonstanten $K(x_q)$ durch $k(x_q)$ z. B. nach dem Prinzip der kleinsten quadratischen Abweichung approximiert werden. Für jeden Parametersatz $(\xi_{1,j_1}, \xi_{2,j_2}, ... \xi_{n,j_n})$ erhält man so die lineare Federkonstante $k_0$ und den Nichtlinearitätskoeffizienten $\beta$.

Hat man nun für alle Parametersätze aller Federausbildungen den Nichtlinearitätskoeffizienten $\beta$ bestimmt, lassen sich die Parametersätze und/oder Federausbildungen auswählen, die die gewünschten Eigenschaften bezüglich der Steifigkeit und des Nichtlinearitätskoeffizienten $\beta$ etc. aufweisen.

Verfahren der analytischen Modellierung:

Beschränkt man sich auf einfache Balkengeometrien, so kann ein analytisches Modell gemäß der Balkentheorie entworfen werden, das die gewünschten Eigenschaften beschreibt. Die Einstellung des Nichtlinearitätskoeffizienten kann durch eine Parameteroptimierung der geometrischen Dimensionen innerhalb des analytischen Modells erfolgen.

Experimentelle Auswahl:

Als weitere Möglichkeit bietet sich die experimentelle Untersuchung von Variationen von ausgewählten Federkonzepten. an. Beispielsweise können Oszillatoren mit an den zu untersuchenden Federelementen aufgehängten Massen untersucht werden. Daraus können Rückschlüsse auf den Nichtlinearitätskoeffizienten gezogen werden. Aufgrund des Produktions- und Messaufwandes können so allerdings nur relativ wenige Dimensionierungen analysiert werden.

Irri Folgenden wird eine beispielhafte mikromechanische Linearfeder genauer beschrieben und einer herkömmlichen, mikromechanischen, linearitätsoptimierten, mäanderförmigen Feder gegenübergestellt. Als Randbedingungen sind gegeben:

- Die Strukturhöhe h ist 100 $\mu$m.
- Das verwendete Material ist einkristallines Silizium, wobei das Koordinatensystem, das durch die Kristallrichtungen gegeben ist, um 45 Grad um die Wafernormale gegen das Koordinatensystem des Elementes gedreht ist.
- Die Federsteifigkeit in Auslenkrichtung soll 400 Nm$^{-1}$ betragen. Wird eine Masse von zwei $\mu$g durch 2 Federn gehalten, so stellt sich eine Eigenfrequenz in Auslenkrichtung bei 20 kHz ein.

Eine herkömmliche mäanderförmige Feder mit den Dimensionen $l_M$ = 436 $\mu$m, $w_M$ = 18 $\mu$m und $d_M$ = 20 $\mu$m besitzt die Steifigkeit 400 Nm$^{-1}$. Die durch die Mäanderstruktur belegte Siliziumfläche beträgt dabei 0.024 mm$^2$. Fig. 13 zeigt diese beispielhafte mäanderförmige Feder.

Fig. 14 zeigt zum Vergleich ein beispielhaftes Aufhängungs-Federelement 10, als Linearfeder 10 ausgebildet, mit den Dimensionen $l$ = 250 $\mu$m, welche im Wesentlichen der Länge der beiden Balkenabschnitte 11 entspricht, der Breite $w$ = 15.3 $\mu$m und einem Abstand $d$ = 250 $\mu$m der beiden Balkenabschnitte 11 der mikromechanischen Feder, wobei diese Linearfeder 10 ebenfalls eine Steifigkeit von 400 Nm$^{-1}$ aufweist. Durch das obig beschriebene Verfahren der finiten Elemente wurden die Abmessungen so gewählt bzw. wurden solche Abmessungen bzw. Ausbildungsparameter ermittelt, dass der Nichtlinearitätskoeffizient $\beta$ im Verhältnis zur mäanderförmigen Feder aus Fig. 13 sehr klein ausfällt. Die durch die Federstruktur der Linearfeder 10 belegte Siliziumfläche beträgt lediglich 0.014 mm$^2$.

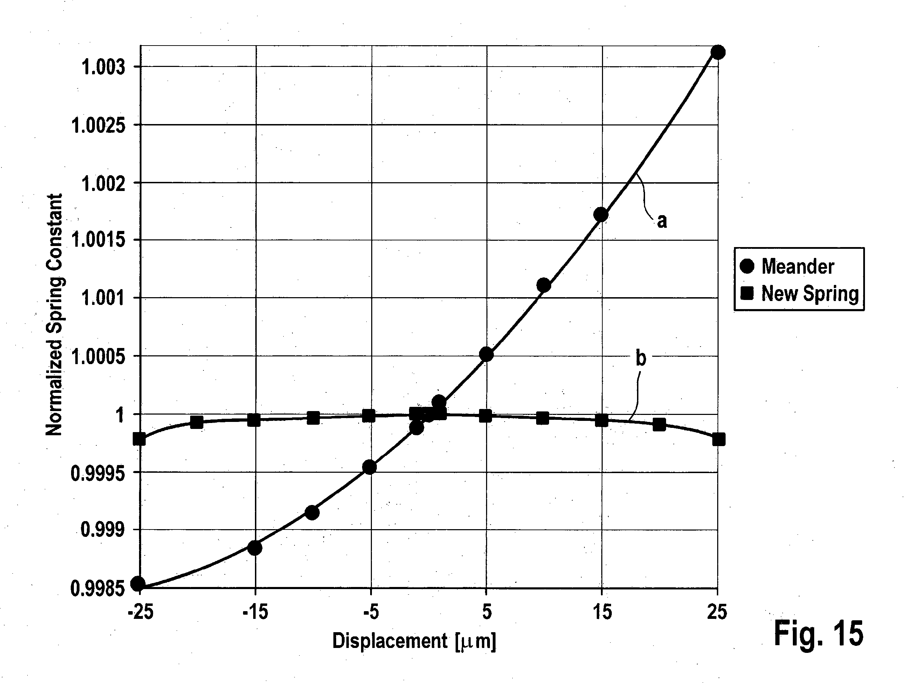

Das unterschiedliche Linearitätsverhalten dieser beiden verschiedenen Federn aus Fig. 13 und 14 ist Fig. 15 dargestellt. Dabei ist die normierte Federkonstante $\hat{k}(x_0)$ in Auslenkrichtung über der Auslenkung abgetragen. Während die mäanderförmige Feder im dargestellten Auslenkungsbereich einen Nichtlinearitätskoeffizienten von 1.3 10$^6$ aufweist, wie in Kurve a veranschaulicht, ist der Nichtlinearitätskoeffizient der neuen Federstruktur betragsmäßig kleiner als 300 000 1/m$^2$, wie dies in Kurve b veranschaulicht ist. Insbesondere ist bei der dargestellten neuen Federstruktur der Nichtlinearitätskoeffizient negativ, so dass durch zusätzliche Effekte auftretende federversteifende Nichtlinearitäten ausgeglichen werden könnten. Ein Oszillator mit der mäanderförmigen Struktur kann ohne Instabilitätsbereiche nur bis etwa 9 $\mu$m Amplitude betrieben werden, mit der neuartigen Federstruktur sind stabile Oszillationen bis zu Amplituden von 23 $\mu$m möglich. Ferner ist die durch die Federanordnung belegte Fläche bei der Mäanderstruktur beträchtlich größer

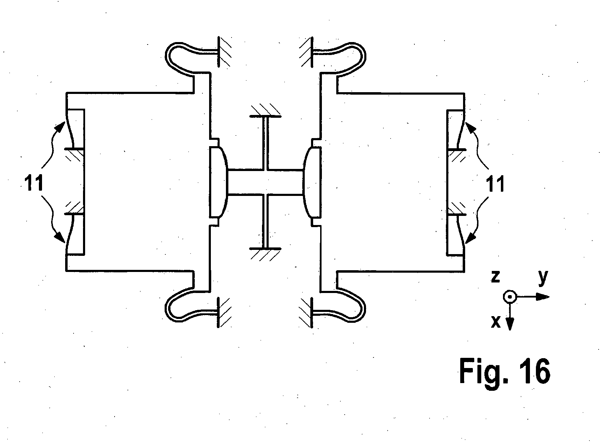

In Fig. 16 ist ein beispielhafter x-Achsen-Drehratensensor dargestellt, welcher zusätzliche Federn 11 aufweist, die steif in x-Richtung ausgebildet sind und unerwünschte Auslenkungen in diese Richtung unterbinden, allerdings auf die Antriebsmode in y- Richtung und die Auslesemode in z-Richtung keinen Einfluss nehmen und entsprechend weich in y- und z-Richtung ausgebildet sind.

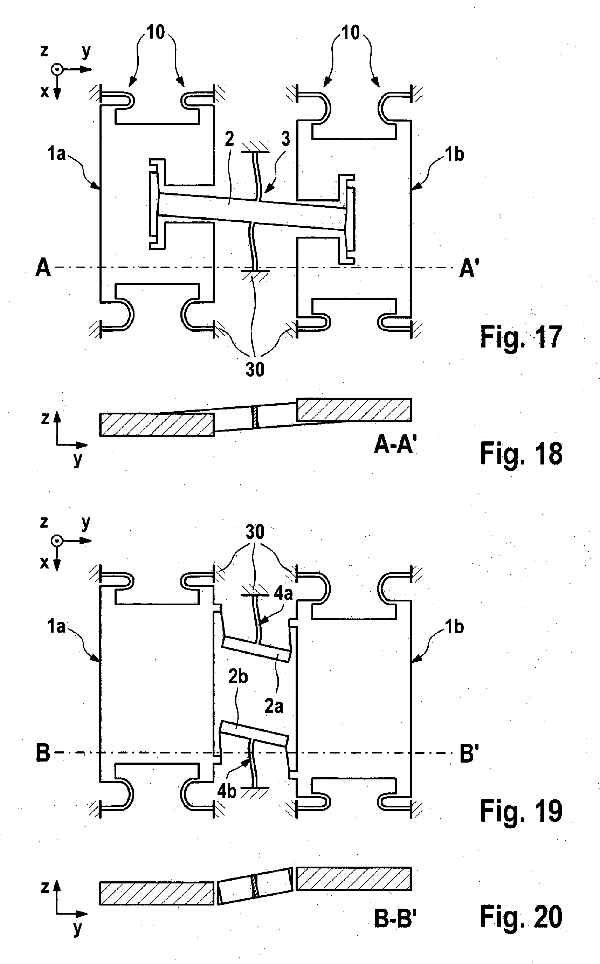

Fig. 17 zeigt einen beispielgemäßen z-Achsen-Drehratensensor, dessen seismische Massen 1a, 1b im Wesentlichen bezüglich ihrer Mitte mit Kopplungsbalken 2 gekoppelt sind. Die seismischen Massen können beispielgemäß sowohl in x-Richtung, als auch in z-Richtung gegenphasig schwingen bzw. ausgelenkt werden. Dieser Drehratensensor ist somit zur Erfassung von Drehraten um die x- und/oder die z-Achse geeignet. Torsionsfeder 3, mittels welcher Kopplungsbalken 2 an Substrat 30 aufgehängt ist, ist so ausgebildet, dass dieser steif gegenüber translatorischen Auslenkungen in z-Richtung und x-Richtung ausgebildet ist, und rotatorische bzw. Torsionsauslenkungen um die x-Achse und die z-Achse zulässt. Seismische Massen 1a und 1b sind zur Quadraturunterdrückung jeweils mittels symmetrisch angeordneten Linearfedern 10 am Substrat 30 aufgehängt. Fig. 17 zeigt eine beispielhafte gegenphasige Auslenkung seismischer Massen 1a, 1b in x-Richtung, aufgrund einer Antriebsmode in y-Richtung und einer erfassten Drehrate um die z-Achse.

In Fig. 18 ist entsprechend dem Schnitt A-A' des beispielgemäßen Drehratensensors aus Fig. 17 die Auslesemode in z-Richtung aufgrund einer zusätzlich erfassten Drehrate um die x-Achse veranschaulicht.

Fig. 19 zeigt einen beispielhaften x-z-Achsen-Drehratensensor mit zwei Kopplungsbalken 2a, 2b, welche jeweils seismische Massen 1a und 1b miteinander koppeln sowie dessen beispielhafte Auslesemoden als x-Achsen und als z-Achsen-Sensor in Fig. 20. Der Antrieb seismischer Massen 1a und 1b erfolgt in y-Richtung. Kopplungsbalken 2a und 2b sind dabei jeweils im Bereich ihres Schwerpunkts mittels einer Torsionsfeder 4a bzw. 4b an Substrat 30 aufgehängt bzw. in Substrat 30 eingespannt. Torsionsfedern 4a und 4b sind dabei so ausgebildet, dass sie translatorische Auslenkungen zumindest in x- und z-Richtung unterdrücken bzw. steif in diese Richtungen ausgebildet sind und Rotations- bzw. Torsionsauslenkungen um die x-Achse und die z-Achse zulassen.

Bei den obig beschriebenen Ausführungsbeispielen für Drehratensensoren ist es möglich die nicht dargestellten Ausleseeinheiten als Antriebseinheiten zu verwenden sowie die nicht dargestellten Antriebseinheiten als Ausleseeinheiten, wo-durch eine nicht dargestellte Verwendung mit vertauschten Antriebs- und Auslesemoden beispielhaft möglich ist.

Bei x-z-Achsen-Drehratensensor ist es beispielgemäß bei oben gezeigten Ausbildungen möglich, diese sowohl als x-, als z-, oder als x-z-Achsen-Drehratensensor zu verwenden.

**Patentansprüche**

1. Mikromechanischer Drehratensensor umfassend zumindest ein Substrat (30), wobei die Grundfläche des Substrats parallel zur x-y-Ebene eines kartesischen Koordinatensystems ausgerichtet ist, mindestens zwei seismische Massen (1, 1a, 1b) und wenigstens jeweils ein Aufhängungs-Federelement (10, 11) zur Aufhängung der seismischen Massen (1, 1a, 1b) am Substrat (30), wobei

   die zumindest zwei seismischen Massen (1, 1a, 1b) durch mindestens einen Kopplungsbalken (2, 2a, 2b) miteinander gekoppelt sind und wenigstens eines der Aufhängungs-Federelemente (10) zumindest zwei Balkenabschnitte (11), welche im unausgelenkten Zustand im Wesentlichen zueinander parallel ausgerichtet sind oder eine Winkelweite von weniger als 45° zueinander aufweisen, und ein oder mehrere Verbindungsabschnitte (12) umfasst, die die Balkenabschnitte (11) miteinander verbinden, **dadurch gekennzeichnet, dass** die Balkenabschnitte bezüglich ihrer Längsrichtung relativ zu-einander verschiebbar sind.

2. Drehratensensor nach Anspruch 1, **dadurch gekennzeichnet, dass** dieser ein oder mehrere Antriebsmittel zum Antreiben einer oder mehrerer seismischer Massen (1, 1a, 1b) und wenigstens eine Ausleseeinrichtung aufweist, wobei das mindestens eine Antriebsmittel die mindestens zwei seismischen Massen (1, 1a, 1b) in y-Richtung antreibt und der Drehratensensor so ausgelegt ist, dass er Dreh-raten um die x-Achse und/oder z-Achse erfassen kann.

3. Drehratensensor nach Anspruch 1 oder 2, **dadurch gekennzeichnet, dass** der Kopplungsbalken (2, 2a, 2b) an zumindest einem Federelement (4, 4a, 4b) aufgehängt ist, welches insbesondere am Substrat (30) eingespannt ist und mit diesem mindestens einen Ankerpunkt bildet, wobei das Federelement (4, 4a, 4b) so ausgebildet und eingespannt bzw. befestigt ist, dass es translatorische Auslenkungen des Kopplungsbalkens (2, 2a, 2b) verhindert.

4. Drehratensensor nach Anspruch 3, **dadurch gekennzeichnet, dass** der Kopplungsbalken (2, 2a, 2b) im Wesentlichen im Bereich seines Schwerpunkts an dem zumindest einen Federelement (4, 4a, 4b) aufgehängt ist.

5. Drehratensensor nach Anspruch 3 oder 4, **dadurch gekennzeichnet, dass** das zumindest eine Federelement (4, 4a, 4b), an welchem der Kopplungsbalken (2, 2a, 2b) aufgehängt ist, eine Torsionsfeder ist, welche eine rotatorische Auslenkung des Kopplungsbalkens um die z-Achse und/oder die x-Achse ermöglicht.

6. Drehratensensor nach mindestens einem der Ansprüche 1 bis 5, **dadurch gekennzeichnet, dass** der Schwerpunkt des einen oder der mehreren Kopplungsbalken (2, 2a, 2b) im Wesentlichen mit dem Schwerpunkt des gesamten Drehratensensors, insbesondere jeweils bezogen auf die x-y-Ebene, zusammenfällt.

7. Drehratensensor nach mindestens einem der Ansprüche 1 bis 6, **dadurch gekennzeichnet, dass** der Kopplungsbalken (2, 2a, 2b) an beiden Enden jeweils mit einer oder mehreren seismischen Masse/n und/oder einer oder mehreren Ausleseeinrichtung/en und/oder einem oder mehreren Antriebsmitteln direkt oder über mindestens ein Federelement (5, 6) gekoppelt ist.

8. Drehratensensor nach mindestens einem der Ansprüche 1 bis 7, **dadurch gekennzeichnet, dass** die seismischen Massen (1, 1a, 1b) jeweils bezüglich einer x-y- und/oder x-z- und/oder y-z-Ebene bezüglich eines kartesischen Koordinatensystems mit dem jeweiligen Mittelpunkt und/oder Schwerpunkt als jeweiligem Ursprung dieses Koordinatensystems symmetrisch ausgebildet und angeordnet sind und eine diesbezüglich symmetrische Aufhängung, mit insbesondere vier Aufhängungs-Federelementen (10, 11), aufweisen.

9. Drehratensensor nach mindestens einem der Ansprüche 1 bis 8, **dadurch gekennzeichnet, dass** zumindest eines der Aufhängungs-Federelemente (10) ein im Wesentlichen einstellbares, insbesondere lineares, Kraft-Auslenkungsverhalten im Wesentlichen in Richtung seiner Balkenabschnitte (11) aufweist.

10. Drehratensensor nach mindestens einem der Ansprüche 1 bis 9, **dadurch gekennzeichnet, dass** zumindest eines der Aufhängungs-Federelemente (10) einen Kopplungsbereich und/oder ein Kopplungselement aufweist, welches insbesondere ein zusätzliches mikromechanisches Federelement umfasst.

11. Drehratensensor nach mindestens einem der Ansprüche 1 bis 10, **dadurch gekennzeichnet, dass** zumindest eines der Aufhängungs-Federelemente (10) Fertigungsparameter, umfassend zumindest die räumlichen Abmessungen (1, h, w) und/oder die Materialparameter der Balkenabschnitte (11) und des wenigstens einen Verbindungsabschnitts (12) und insbesondere der Kopplungsbereiche und/oder der Kopplungselemente, solche Werte aufweisen, dass die Feder (10) in Richtung ihrer Balkenabschnitte (11) ein im Wesentliches einstellbares, insbesondere lineares, Kraft-Auslenkverhalten, zumindest innerhalb eines definierten Auslenkungsintervalls, aufweist.

12. Drehratensensor nach mindestens einem der Ansprüche 1 bis 11, **dadurch gekennzeichnet, dass** zumindest eines der Aufhängungs-Federelemente (10) so ausgebildet ist, dass die Balkenabschnitte (11) und der/die Verbindungsabschnitt/e (12) der Feder im unausgelenkten Zustand im Wesentlichen u-förmig, v-förmig oder s-förmig ausgebildet und angeordnet sind.

13. Drehratensensor nach mindestens einem der Ansprüche 1 bis 12, **dadurch gekennzeichnet, dass** zumindest eines der Aufhängungs-Federelemente (10) ein im Wesentlichen einstellbares, insbesondere lineares, Kraft-Auslenkverhalten aufweist, welches zumindest durch die Ausbildung der Balkenabschnitte (11) mit definierten Längen (l) und Breiten (w) sowie durch die Anordnung der wenigstens zwei Balkenabschnitte (11) mit einem definierten Abstand (d) zueinander bestimmt ist.

14. Drehratensensor nach mindestens einem der Ansprüche 1 bis 13, **dadurch gekennzeichnet, dass** die Kristallstruktur des Materials zumindest eines der Aufhängungs-Federelemente (10) so ausgerichtet ist, dass die Normale der Kristallgitterebene um im Wesentlichen 45° zur Normalen des Substrats, aus welchem die Feder gefertigt ist, ausgerichtet ist.

15. Drehratensensor nach mindestens einem der Ansprüche 1 bis 14, **dadurch gekennzeichnet, dass** zumindest eines der Aufhängungs-Federelemente (10) so ausgebildet ist, dass der Betrag des Nichtlinearitätskoeffizienten (ß) zweiter Ordnung ihrer Federsteifigkeit bezüglich einer Auslenkung im Wesentlichen in Richtung ihrer Balkenabschnitte (11) geringer als 2000000 $1/m^2$, insbesondere geringer als 300000 $1/m^2$, ist.

16. Drehratensensor nach mindestens einem der Ansprüche 1 bis 15, **dadurch gekennzeichnet, dass** zumindest eines der Aufhängungs-Federelemente (10) so ausgebildet ist und ein solches Kraft-Auslenkungsverhalten aufweist, dass dieses ein nichtlineares Kraft-Auslenkungsverhalten einer seismischen Masse (1a, 1b) in Antriebsrichtung, hervorgerufen durch das unerwünschte Kraft-Auslenkungsverhalten einer oder mehrerer anderer Aufhängungs-Federelemente, kompensiert und diese seismische Masse (1a, 1b) insbesondere aufgrund dieses zumindest einen Aufhängungs-Federelements (10) mit definiert eingestelltem Kraft-Auslenkungsverhalten insgesamt ein im Wesentlichen lineares Kraft-Auslenkungsverhalten in Antriebsrichtung aufweist.

17. Drehratensensor nach mindestens einem der Ansprüche 1 bis 16, welcher eine Drehrate um die x-Achse erfassen kann, **dadurch gekennzeichnet, dass** der Antrieb der seismischen Massen (1a, 1b) in y-Richtung erfolgt, wobei die seismischen Massen an Aufhängungs-Federelementen (10, 11) aufgehängt sind, von denen jeweils zumindest eines in x- Richtung steif ausgebildet ist, wobei der Kopplungsbalken (2) mittels einer Torsionsfeder (4), welche Torsionen um die x-Achse zulässt und steif in x- und z-Richtung ist, am Substrat (30) aufgehängt ist und an jedem seiner beiden Enden mittels Federelementen (5, 6) mit den seismischen Massen (1a, 1b) gekoppelt ist.

18. Drehratensensor nach mindestens einem der Ansprüche 1 bis 17, welcher eine Drehrate um die x-Achse und die z-Achse erfassen kann, **dadurch gekennzeichnet, dass** der Antrieb der seismischen Massen (1a, 1b) in y-Richtung erfolgt, wobei der Kopplungsbalken (2) mittels einer Torsionsfeder (4), welche Torsionen um die x-Achse und die z-Achse zulässt und steif in x- und z-Richtung ist, am Substrat (30) aufgehängt ist.

19. Drehratensensor nach mindestens einem der Ansprüche 1 bis 18, **dadurch gekennzeichnet, dass** dieser als ein Mikro-Elektro-Mechanisches-System (MEMS) oder MEMS-Modul ausgebildet ist, welches insbesondere mechanische und elektronische Mittel zum Anschluss und/oder Zusammenwirken an/mit weiteren MEMS-Modulen und/oder mit mindestens einer elektronischen Signalverarbeitungsschaltung aufweist.

20. Verfahren zur Herstellung eines Drehratensensors, wobei mittels eines Herstellungsprozesses zur Herstellung mikromechanischer Systeme aus einem Substrat, welches insbesondere aus kristallinem Silizium oder mehreren Schichten Halbleitermaterials und/oder Metall/en besteht, mikromechanische Elemente ausgebildet werden, **dadurch gekennzeichnet, dass** dabei ein Drehratensensor gemäß mindestens einem der Ansprüche 1 bis 19 ausgebildet wird.

21. Verwendung des Drehratensensors gemäß mindestens einem der Ansprüche 1 bis 19 in Kraftfahrzeugen, insbesondere in einem Kraftfahrzeugregelungssystem.

**Claims**

1. Micromechanical rotation rate sensor comprising at least one substrate (30), wherein the base surface of the substrate is oriented parallel to the x-y plane of a Cartesian coordinate system, at least two seismic masses (1, 1a, 1b) and in each case at least one suspension spring element (10, 11) for suspending the seismic masses (1, 1a, 1b) from the substrate (30), wherein
the at least two seismic masses (1, 1a, 1b) are coupled to one another by means of at least one coupling bar (2, 2a, 2b), and at least one of the suspension spring elements (10) comprises at least two bar sections (11), which, in the undeflected state, are oriented essentially parallel to one another or are at an angle of less than 45° with respect to one another, and one or more connecting sections (12), which connect the bar sections (11) to one another, **characterized in that** the bar sections can be displaced relative to one another in their longitudinal direction.

2. Rotation rate sensor according to Claim 1, **characterized in that** this rotation rate sensor has one or more drive means for driving one or more seismic masses (1, 1a, 1b) and at least one reading device, wherein the at least one drive means drives the at least two seismic masses (1, 1a, 1b) in the y direction, and the rotation rate sensor is configured in such a way that it can sense rotation rates about the x axis and/or z axis.

3. Rotation rate sensor according to Claim 1 or 2, **characterized in that** the coupling bar (2, 2a, 2b) is suspended from at least one spring element (4, 4a, 4b) which is clamped in, in particular, on the substrate (30) and forms therewith at least one anchoring point, wherein the spring element (4, 4a, 4b) is embodied and clamped in or attached in such a way that it prevents translatory deflections of the coupling bar (2, 2a, 2b).

4. Rotation rate sensor according to Claim 3, **characterized in that** the coupling bar (2, 2a, 2b) is suspended essentially in the region of its center of gravity from the at least one spring element (4, 4a, 4b).

5. Rotation rate sensor according to Claim 3 or 4, **characterized in that** the at least one spring element (4, 4a, 4b) from which the coupling bar (2, 2a, 2b) is suspended is a torsion spring which permits rotational deflection of the coupling bar about the z axis and/or the x axis.

6. Rotation rate sensor according to at least one of Claims 1 to 5, **characterized in that** the center of gravity of the one or more coupling bars (2, 2a, 2b) coincides essentially with the center of gravity of the entire rotation rate sensor, in particular respectively related to the x-y plane.

7. Rotation rate sensor according to at least one of Claims 1 to 6, **characterized in that** the coupling bar (2, 2a, 2b) is coupled at each of its ends to one or more seismic masses and/or one or more reading devices and/or one or more drive means, directly or via at least one spring element (5, 6).

8. Rotation rate sensor according to at least one of Claims 1 to 7, **characterized in that** the seismic masses (1, 1a, 1b) are each embodied and arranged symmetrically with respect to an x-y plane and/or x-z plane and/or y-z plane with respect to a Cartesian coordinate system with the respective center point and/or center of gravity as a respective origin of this coordinate system, and have a suspension means which is symmetrical with respect to the latter, having in particular four suspension spring elements (10, 11).

9. Rotation rate sensor according to at least one of Claims 1 to 8, **characterized in that** at least one of the suspension spring elements (10) has an essentially adjustable, in particular linear, force deflection behavior, essentially in the direction of its bar sections (11).

10. Rotation rate sensor according to at least one of Claims 1 to 9, **characterized in that** at least one of the suspension spring elements (10) has a coupling region and/or a coupling element which comprises, in particular, an additional micromechanical spring element.

11. Rotation rate sensor according to at least one of Claims 1 to 10, **characterized in that** at least one of the suspension spring elements (10) has fabrication parameters comprising at least the spatial dimensions (1, h, w) and/or the material parameters of the bar sections (11) and of the at least one connecting section (12) and, in particular, of the coupling regions and/or of the coupling elements, have such values that the spring (10) has in the direction of its bar sections (11) an essentially adjustable, in particular linear, force deflection behavior, at least within a defined deflection interval.

12. Rotation rate sensor according to at least one of Claims 1 to 11, **characterized in that** at least one of the suspension spring elements (10) is embodied in such a way that the bar sections (11) and the connecting section or sections (12) of the spring are embodied and arranged in an essentially u shape, v shape or s shape in the undeflected state.

13. Rotation rate sensor according to at least one of Claims 1 to 12, **characterized in that** at least one of the suspension spring elements (10) has an essentially adjustable, in particular linear, force deflection behavior which is determined at least by the embodiment of the bar sections (11) with defined lengths (1) and widths (w) and by the arrangement of the at least two bar sections (11) at a defined distance (d) from one another.

14. Rotation rate sensor according to at least one of Claims 1 to 13, **characterized in that** the crystal structure of the material of at least one of the suspension spring elements (10) is oriented in such a way that the normal of the crystal lattice plane is oriented essentially 45° with respect to the normal of the substrate from which the spring is fabricated.

15. Rotation rate sensor according to at least one of Claims 1 to 14, **characterized in that** at least one of the suspension spring elements (10) is embodied in such a way that the absolute value of the nonlinearity coefficient ($\beta$) of the second order of its spring stiffness with respect to a deflection essentially in the direction of its bar sections (11) is less than 2 000 000 l/m$^2$, in particular less than 300 000 l/m$^2$.

16. Rotation rate sensor according to at least one of Claims 1 to 15, **characterized in that** at least one of the suspension spring elements (10) is embodied and has such a force deflection behavior that this suspension spring element (10) compensates a nonlinear force deflection behavior of a seismic mass (1a, 1b) in the driving direction, caused by the undesired force deflection behavior of one or more other suspension spring elements, and this seismic mass (1a, 1b) has overall an essentially linear force deflection behavior in the driving direction, in particular owing to this at least one suspension spring element (10) with a force deflection behavior which has been set in a defined fashion.

17. Rotation rate sensor according to at least one of Claims 1 to 16, which can sense a rotation rate about the x axis, **characterized in that** the seismic masses (1a, 1b) are driven in the y direction, wherein the seismic masses are suspended from suspension spring elements (10, 11), at least one of which is of rigid design in the x direction in each case, wherein the coupling bar (2) is suspended from the substrate (30) by means of a torsion spring (4) which permits torsion about the x axis and is rigid in the x and z directions, and said coupling bar is coupled at each of its two ends to the seismic masses (1a, 1b) by means of spring elements (5, 6).

18. Rotation rate sensor according to at least one of Claims 1 to 17, which can sense a rotation rate about the x axis and the z axis, **characterized in that** the seismic masses (1a, 1b) are driven in the y direction, wherein the coupling bar (2) is suspended from the substrate (30) by means of a torsion spring (4) which permits torsion about the x axis and the z axis and is rigid in the x direction and z direction.

19. Rotation rate sensor according to at least one of Claims 1 to 18, **characterized in that** this rotation rate sensor is embodied as a micro-electro-mechanical system (MEMS) or MEMS module which has, in particular, mechanical and electronic means for connecting to and/or interacting with further MEMS modules and/or with at least one electronic signal processing circuit.

20. Method for manufacturing a rotation rate sensor, wherein micromechanical elements are formed by means of a manufacturing process for manufacturing micromechanical systems from a substrate which is composed, in particular, from crystalline silicon or a plurality of layers of semiconductor material and/or metal or metals, **characterized in that** in this context a rotation rate sensor is embodied according to at least one of Claims 1 to 19.

21. Use of the rotation rate sensor according to at least one of Claims 1 to 19 in motor vehicles, in particular in a motor vehicle control system.

**Revendications**

1. Capteur micromécanique de vitesse de rotation comprenant au moins un substrat (30), la surface de base du substrat étant orientée parallèlement au plan x-y d'un système de coordonnées cartésiennes, au moins deux masses sismiques (1, 1a, 1b) et au moins un élément élastique respectif de suspension (10, 11) permettant de suspendre les masses sismiques (1, 1a, 1b) sur le substrat (30), les deux ou plusieurs masses sismiques (1, 1a, 1b) étant accouplées l'une à l'autre au moyen d'au moins une poutre d'accouplement (2, 2a, 2b) et au moins un des éléments élastiques de suspension (10) comprenant au moins deux parties (11) de poutre qui, à l'état non déplacé, sont alignées essentiellement parallèlement l'une à l'autre ou forment une plage angulaire inférieure à 45° l'une par rapport à l'autre, et comprenant une ou plusieurs parties de liaison (12) qui relient l'une à l'autre les parties de poutre (11), **caractérisé en ce que** les poutres peuvent coulisser l'une par rapport à l'autre dans le sens de leur longueur.

2. Capteur de vitesse de rotation selon la revendication 1, **caractérisé en ce qu'**il présente un ou plusieurs moyens d'entraînement qui entraînent une ou plusieurs masses sismiques (1, 1a, 1b) et au moins un dispositif de lecture, le ou les moyens d'entraînement entraînant les deux ou plusieurs masses sismiques (1, 1a, lb) dans la direction y et le capteur de vitesse de rotation étant conçu de manière à pouvoir détecter des vitesses de rotation autour de l'axe x et/ou de l'axe z.

3. Capteur de vitesse de rotation selon les revendications 1 ou 2, **caractérisé en ce que** la poutre d'accouplement (2, 2a, 2b) est suspendue à au moins un élément élastique (4, 4a, 4b) qui est en particulier serré sur le substrat (30) et forme avec ce dernier au moins un point d'ancrage, l'élément élastique (4, 4a, 4b) étant configuré et serré ou fixé de manière à empêcher des déplacements de translation de la poutre d'accouplement (2, 2a, 2b).

4. Capteur de vitesse de rotation selon la revendication 3, **caractérisé en ce que** la poutre d'accouplement (2, 2a, 2b) est suspendue essentiellement au niveau de son centre de masse sur le ou les éléments élastiques (4, 4a, 4b).

5. Capteur de vitesse de rotation selon les revendications 3 ou 4, **caractérisé en ce que** les ou les éléments élastiques (4, 4a, 4b) sur lequel ou lesquels la poutre d'accouplement (2, 2a, 2b) est suspendue sont des ressorts de torsion qui permettent un déplacement de rotation de la poutre d'accouplement autour de l'axe z et/ou autour de l'axe x.

6. Capteur de vitesse de rotation selon au moins l'une des revendications 1 à 5, **caractérisé en ce que** le centre de masse de la ou des poutres d'accouplement (2, 2a, 2b) coïncide essentiellement avec le centre de masse de l'ensemble du capteur de vitesse de rotation, en particulier dans le plan x-y.

7. Capteur de vitesse de rotation selon au moins l'une des revendications 1 à 6, **caractérisé en ce qu'**à chacune de ses deux extrémités la poutre d'accouplement (2, 2a, 2b) est accouplée directement ou par l'intermédiaire d'au moins un élément élastique (5, 6) à une ou plusieurs masses sismiques, à un ou plusieurs dispositifs de lecture et/ou à un ou plusieurs moyens d'entraînement.

8. Capteur de vitesse de rotation selon au moins l'une des revendications 1 à 7, **caractérisé en ce que** les masses sismiques (1, 1a, 1b) sont configurées et disposées symétriquement par rapport à un plan x-y et/ou un plan x-z et/ou un plan y-z d'un système de coordonnées cartésiennes, avec le point central et/ou le centre de masse comme origine de ce système de coordonnées, et présentent une suspension symétrique par rapport à ce plan, en particulier avec quatre éléments élastiques de suspension (10, 11).

9. Capteur de vitesse de rotation selon au moins l'une des revendications 1 à 8, **caractérisé en ce qu'**au moins l'un des éléments élastiques de suspension (10) présente un rapport essentiellement ajustable et en particulier linéaire entre le déplacement et la force, en particulier dans la direction de ses parties de poutre (11).

10. Capteur de vitesse de rotation selon au moins l'une des revendications 1 à 9, **caractérisé en ce qu'**au moins l'un des éléments élastiques de suspension (10) présente une partie d'accouplement et/ou un élément d'accouplement qui comporte en particulier un élément micromécanique élastique supplémentaire.

11. Capteur de vitesse de rotation selon au moins l'une des revendications 1 à 10, **caractérisé en ce qu'**au moins l'un des éléments élastiques de suspension (10) présente des paramètres de fabrication comprenant au moins les mesures spatiales (l, h, w) et/ou les paramètres du matériau des parties de poutre (11) et de la ou des parties de liaison (12) et en particulier des parties d'accouplement et/ou **en ce que** des éléments d'accouplement présentent des valeurs telles que le ressort (10) présente dans la direction de ses parties de poutre (11) un rapport essentiellement ajustable et en particulier linéaire entre le déplacement et la force, au moins à l'intérieur d'un intervalle de déplacement défini.

12. Capteur de vitesse de rotation selon au moins l'une des revendications 1 à 11, **caractérisé en ce qu'**au moins l'un des éléments élastiques de suspension (10) est configuré de telle sorte que les parties de poutre (11) et la ou les parties de liaison (12) du ressort sont configurées et disposées essentiellement en forme de U, en forme de V ou en forme de S à l'état non déplacé.

13. Capteur de vitesse de rotation selon au moins l'une des revendications 1 à 12, **caractérisé en ce qu'**au moins l'un des éléments élastiques de suspension (10) présente un rapport essentiellement ajustable et en particulier linéaire entre le déplacement et la force qui est défini au moins par la configuration des parties de poutre (11) à une longueur (1) et une largeur (w) définies ainsi que par l'agencement des deux ou plusieurs parties de poutre (11) à une distance mutuelle (d) définie.

14. Capteur de vitesse de rotation selon au moins l'une des revendications 1 à 13, **caractérisé en ce que** la structure cristalline du matériau d'au moins l'un des éléments élastiques de suspension (10) est alignée de telle sorte que la normale du plan du réseau cristallin est orientée essentiellement à 45° par rapport à la normale du substrat dans lequel le ressort est réalisé.

15. Capteur de vitesse de rotation selon au moins l'une des revendications 1 à 14, **caractérisé en ce qu'**au moins l'un des éléments élastiques de suspension (10) est configuré de telle sorte que la valeur du coefficient de non linéarité ($\beta$) du deuxième ordre de sa rigidité élastique par rapport à son déplacement essentiellement dans la direction de ses parties de poutre (11) est inférieure à 2 000 000 $1/m^2$ et en particulier inférieure à 300 000 $1/m^2$.

16. Capteur de vitesse de rotation selon au moins l'une des revendications 1 à 15, **caractérisé en ce qu'**au moins l'un des éléments élastiques de suspension (10) est configuré et présente un rapport force-déplacement tel que ce dernier compense le rapport force-déplacement non linéaire d'une masse sismique (1a, 1b) dans la direction d'entraînement provoqué par déplacement d'un ou plusieurs autres éléments élastiques de suspension et **en ce que** cette masse sismique (1a, 1b), en particulier sur la base de ce ou ces éléments élastiques de suspension (10) à rapport force-déplacement réglé de manière définie, présente globalement un rapport force-déplacement essentiellement linéaire dans la direction d'entraînement.

17. Capteur de vitesse de rotation selon au moins l'une des revendications 1 à 16, capable de saisir une vitesse de rotation autour de l'axe x, **caractérisé en ce que** l'entraînement des masses sismiques (1a, 1b) s'effectue dans la direction y, les masses sismiques étant suspendues à des éléments élastiques de suspension (10, 11) dont au moins l'un est rigide dans la direction x, la poutre d'accouplement (2) étant suspendue sur le substrat (30) au moyen d'un ressort de torsion (4) qui permet des torsions autour de l'axe x et qui est rigide dans la direction x et la direction z, et est accouplée à chacune de ses deux extrémités aux masses sismiques (1a, 1b) au moyen d'éléments élastiques (5, 6).

18. Capteur de vitesse de rotation selon au moins l'une des revendications 1 à 17, capable de détecter une vitesse de rotation autour de l'axe x et de l'axe z, **caractérisé en ce que** l'entraînement des masses sismiques (1a, 1b) s'effectue dans la direction y, la poutre d'accouplement (2) étant suspendue au moyen d'un ressort de torsion (4) qui permet des torsions autour de l'axe x et de l'axe z et qui est rigide dans la direction x et la direction z, sur le substrat (30).

19. Capteur de vitesse de rotation selon au moins l'une des revendications 1 à 18, **caractérisé en ce que** ce capteur est configuré comme système microélectromécanique (MEMS) ou module MEMS qui présente en particulier des moyens mécaniques et des moyens électroniques de raccordement et/ou de coopération avec d'autres modules MEMS et/ou avec au moins un circuit électronique de traitement de signaux.

20. Procédé de fabrication d'un capteur de vitesse de rotation, dans lequel au moyen d'une opération de fabrication de systèmes micromécaniques sur un substrat qui est constitué en particulier de silicium cristallin ou de plusieurs couches de matériau semi-conducteur et/ou de métaux, des éléments micromécaniques sont formés, **caractérisé en ce que** l'on forme ainsi un capteur de vitesse de rotation selon au moins l'une des revendications 1 à 19.

**21.** Utilisation du capteur de vitesse de rotation selon au moins l'une des revendications 1 à 19 dans des véhicules automobiles, en particulier dans un système de régulation de véhicules automobiles.

Fig. 1

Fig. 2

**Fig. 3**

**Fig. 4**

Fig. 5

Fig. 6

Fig. 7

Fig. 8

Fig. 9

Fig. 10

Fig. 11

a)

1

+y

10

b)

1

+y

10

c)

1

+y

11

10

z

y

x

**Fig. 12**

$l_M$

h

$w_M$

$d_M$

**Fig. 13**

10

11

12

11

11

l

d

w

h

**Fig. 14**

Fig. 15

**Fig. 16**

Fig. 17

Fig. 18

A-A'

Fig. 19

Fig. 20

B-B'

**EP 2 193 335 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6230563 B1
- WO 2006034706 A1
- WO 9639614 A